# FASCICULE DE BREVET EUROPEEN

(11) **EP 0 456 561 B1**
(45) Date de publication et mention de la délivrance du brevet: **06.04.1994**
(21) Numéro de dépôt: 91401169.7
(22) Date de dépôt: 03.05.1991
(51) Int. Cl.: B60R 13/06

(54) **Armature pour profilé utilisable, en particulier, dans l'industrie automobile**
Profilverstärkungskern, insbesondere zum Gebrauch in der Kraftfahrzeugindustrie
Strengthening core for sections used particularly in the motor industry

(30) Priorité: 10.05.1990 FR 9005800
(43) Date de publication de la demande: 13.11.1991
(73) Titulaire: HUTCHINSON, F-75008 Paris (FR)
(72) Inventeur: Frappier, Alain, F-45200 Montargis (FR)
(74) Mandataire: Orès, Bernard

(56) Documents cités:
- EP-A- 0 252 659
- EP-A- 0 277 425
- FR-A- 2 438 536
- FR-A- 2 509 825
- PATENT ABSTRACTS OF JAPAN, vol. 10, no. 37 (M-453)[2094], 14 février 1986;
- & JP-A-60 189 658 (KINUGAWA GOMU KOGYO K.K.) 27-09-1985

## Description

L'invention a pour objet une armature pour profilé utilisable, en particulier, dans le domaine de l'industrie automobile et, notamment, pour la fabrication de joints d'étanchéité pour vitres ou glaces, coffres, custodes, capots ou portes,...etc.

On connaît déjà, par exemple par FR-A-2 258 514 ou FR-A-2 438 536 ou FR-A-2 352 942 ou EP-A-0 252 659 ou encore EP-A-0 124 671, des armatures pour joints d'étanchéité formées d'une série d'éléments parallèles reliés les uns aux autres par de courtes barrettes s'étendant d'un point d'un élément à un point d'un élément adjacent. Ces armatures connues, cependant, ne sont pas entièrement satisfaisantes en raison de leur faible compressibilité d'une part et, d'autre part, parce qu'elles sont susceptibles de s'étirer de manière prohibitive pour peu que l'effort de traction ne soit pas dirigé suivant une direction prédéterminée. Or, les impératifs de rationalisation des opérations de montage de l'industrie automobile, en particulier des joints d'étanchéité constitués à l'aide d'une bande de matériau(x) élastomère(s) et/ou plastomère(s) renforcée par une armature ont amené les constructeurs à abandonner la coupe après montage du joint et à n'utiliser que des profilés précoupés à une longueur prédeterminée dont les extrémités peuvent être raboutées, collées ou soudées avant mise en place par compression ce qui présente, outre un avantage de coût, également l'avantage d'un meilleur maintien du joint sur le pourtour de la baie qu'il équipe ainsi que la possibilité de s'affranchir des inconvénients liés aux phénomènes de jonction non satisfaisante des extrémités découpées d'un profilé de trop grande longueur, comme la rouille des armatures, des taches, des cassures ou analogues.

Cependant, étant donné la forme plus ou moins complexe des baies à garnir de joints, dans le cas de coffres d'automobiles notamment, mais aussi pour des capots de machines outils, des portes d'hélicoptères ou d'autres moyens de transport maritimes, ferroviaires ou routiers d'une part et, d'autre part, les différences de cotes en longueurs développées desdites baies liées, par exemple dans le cas de l'industrie automobile, à la technique de fabrication par tôles soudées, les desiderata des constructeurs de véhicules ou de machines ne sont que peu ou pas satisfaits par les dispositifs connus quine permettent pas aux joints incorporant des armatures connues d'épouser les rebords des pièces à garnir tout en assurant une fixation mécaniquement résistante sur lesdits rebords.

C'est, par conséquent, un but de l'invention de fournir une armature pour profilé qui soit exempte des inconvénients des dispositifs connus, présente de bonnes caractéristiques de traction/compression, avec une forte compressibilité et une extensibilité faible comparée à sa compressibilité, tout en étant de fabrication simple et économique.

Une armature pour profilé selon l'invention, comprenant une multiplicité d'éléments formant un dessin répétitif de "vides" et "pleins" suivant sa direction longitudinale et dans laquelle les "vides" sont ménagés par des fentes à bords dirigés sensiblement perpendiculairement à la direction longitudinale de l'armature est caractérisée en ce que ces "vides" ont des extrémités en "doigt de gant" de plus faible largeur que le reste des fentes.

Une telle armature, avantageusement découpée dans une feuille de métal ou de matière plastique, peut être exécutée suivant différentes formes de réalisations préférées.

Dans une première d'entre elles l'armature comprend, sur chacun de ses bords longitudinaux, des échancrures alignées avec les "pleins" du reste de l'armature et limitant des pattes alignées avec les "vides".

Dans un mode d'exécution préféré, chaque échancrure a son extrémité la plus distante du bord de l'armature également conformée suivant un "doigt de gant" de plus faible largeur que celle du reste de l'échancrure.

Dans une variante d'exécution préférée, les échancrures des bords longitudinaux de l'armature sont des fentes de largeur constante sur toute leur longueur et à extrémité simplement arrondie.

Dans une forme de réalisation préférée, la largeur des "pleins" ou barreaux du corps de l'armature est légèrement supérieure à la plus grande largeur des "vides" ou fentes, et il en est de même en ce qui concerne les largeurs des échancrures et pattes ménagées sur les bords longitudinaux, la largeur des pattes étant très sensiblement égale à celle des barreaux ou "pleins" et celle des échancrures à celle des fentes ou "vides".

Dans une réalisation préférée ,les pattes des bords longitudinaux de l'armature sont reliées aux barreaux du corps de l'armature par des barrettes de plus faible largeur que lesdites pattes et lesdits barreaux.

Les dimensions relatives des barreaux, des fentes et des échancrures sont préférablement choisies pour que la "fibre neutre" de l'armature sous contrainte ait une position prédéterminée permettant d'éviter toute déformation nuisible du profilé dans lequel est noyée ladite armature.

Cette dernière est de préférence incorporée dans le profilé par un procédé d'extrusion d'un ou de matériau(x) élastomère(s) et/ou plastomère(s) et, lorsque le profilé est, par exemple, un joint d'étanchéité d'une partie ouvrante de véhicule, l'armature pliée en U est noyée dans une partie du profilé qui ménage une pince à section de montage sur un bord de tôle, ou analogue.

Selon une autre caractéristique de l'invention, la déformation axiale par allongement du profilé dans lequel est incorporée l'armature est interdite, complémentairement, par un ou des fils inextensibles noyés dans le matériau du profilé et qui sont accolés ou juxtaposés à l'armature.

L'invention a aussi pour objet un flan en métal ou autre matériau comme une matière plastique présentant des caractéristiques mécaniques analogues, notamment en traction/compression et flexion, façonné pour former, après pliage, une armature de profilé utilisable, notamment, pour la fabrication de joints d'étanchéité, caractérisé en ce qu'il est découpé suivant une succession régulière de "pleins" et "vides" ces derniers étant conformés suivant des fentes allongées dirigées sensiblement perpendiculairement à la direction longitudinale du flan et terminées à leurs extrémités par des évidements en "doigt de gant" de plus faible largeur que le reste desdites fentes.

Dans une réalisation préférée d'un tel flan, ses bords longitudinaux présentent des échancrures de forme semblable à celle desdites fentes et qui sont décalées, -suivant la direction longitudinale du flan-, par rapport aux fentes.

L'invention a également pour objet un profilé, notamment une bande ou joint d'étanchéité utilisable en particulier dans le domaine de l'industrie automobile, comme une coulisse, un lécheur de bas de glace, un joint de coffre, de capot , de porte ou de custode, ..., etc comportant une armature telle que définie ci-dessus.

D'autres caractéristiques de l'invention apparaitront de la description qui suit, faite à titre d'exemple et en référence au dessin annexé dans lequel :
- la figure 1 est une vue en plan d'un flan d'armature suivant l'invention ;
- la figure 2 est une vue en coupe transversale par un plan 2-2 de l'armature de la figure 1;
- la figure 3 est une vue partielle illustrant une variante de l'armature de la figure 1 ;
- la figure 4 est une vue en perspective très schématique d'un joint d'étanchéité à armature suivant l'invention ;
- la figure 5 est une vue partielle de la figure 1 mais à plus grande échelle ;
- les figures 6 à 8 sont des vues analogues à celles de la figure 1 mais pour d'autres formes de réalisation.

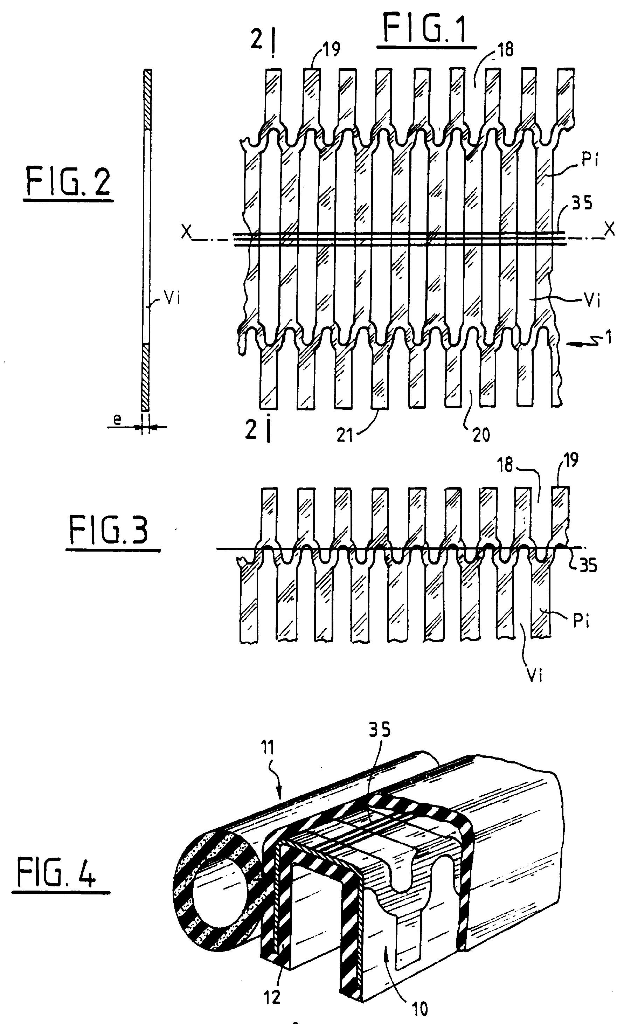

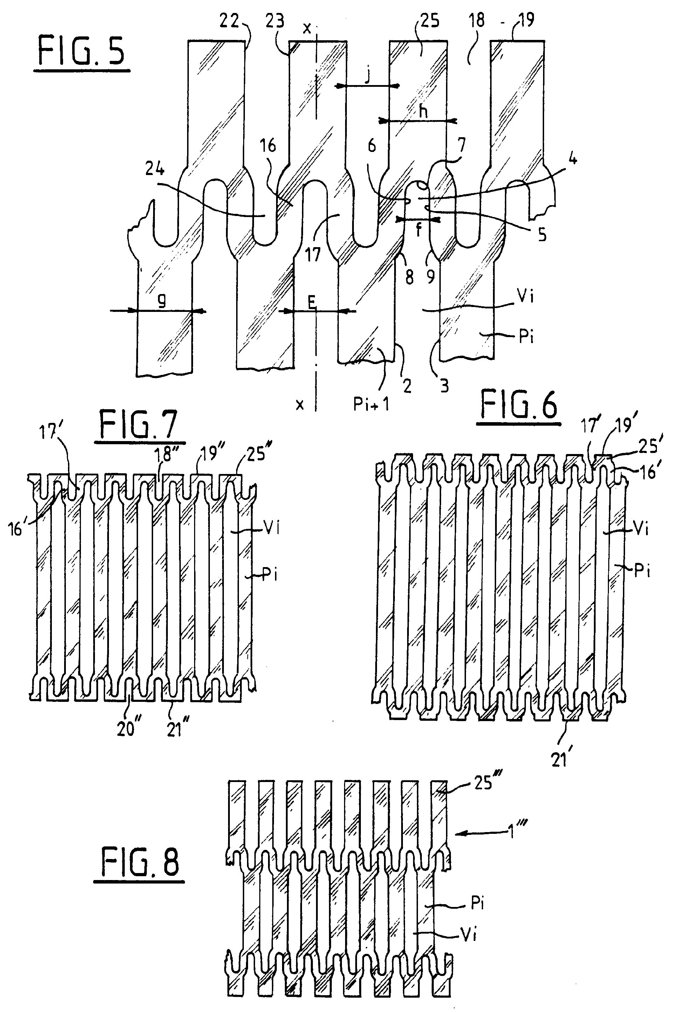

On se réfère d'abord à la figure 1 qui montre une feuille ou flan en métal, alliage métallique ou autre matériau présentant des caractéristiques mécaniques analogues, désigné dans son ensemble par la référence 1, de faible épaisseur e et destiné à former, après pliage en U autour de deux axes parallèles à la trace XX de son plan de symétrie et de part et d'autre de celui-ci, l'armature 10 de la figure 4. Le flan 1 selon l'invention, obtenu par découpage ou estampage à la presse à partir d'un feuillard ou d'une feuille pleine se déplaçant pas-à-pas sous un outil de coupe, est conformé comme illustré sur les figures 1 et 5, c'est-à-dire pour présenter :
. des "pleins" ou barreaux pᵢ (i = 1, 2,...,n) s'étendant sensiblement perpendiculairement à l'axe XX et de forme générale rectangulaire, vus en plan ;
. des "vides " ou fentes vᵢ ( i = 1, 2, . . ., n) parallèles les uns aux autres, également dirigés sensiblement perpendiculairement à l'axe XX pour séparer deux "pleins " pᵢ, pᵢ₊₁.

Comme bien visible sur la figure 5, les vides vᵢ qui sont symétriques par rapport à la trace XX de l'armature sont délimités par deux longs côtés 2, 3, parallèles, s'étendant perpendiculairement à l'axe XX et distants entre eux d'une largeur E, lesdits côtés étant réunis à chacune de leurs extrémités par une découpe en "doigt de gant", 4, limitée par des bords longitudinaux 5 et 6 parallèles et distants d'une largeur f, (inférieure à E), reliés aux bords 2 et 3 par des congés 8 et 9, respectivement, et à leurs autres extrémités par un arc de cercle 7.

Vu en plan, et avant que l'armature ne soit conformée en U pour être incorporée dans un profilé comme une bande d'étanchéité, une coulisse, un lécheur de glace ou vitre d'automobile, un joint de porte, de coffre, de custode, etc..., un flan d'armature se présente ainsi quelque peu suivant une grille à barreaux pᵢ (séparés par des vides vᵢ) et réunis à leurs extrémités par des barrettes 16 et 17, de plus faible largeur que les barreaux pᵢ et qui sont symétriques par rapport à un plan xx qui est un plan de symétrie de chaque vide vᵢ.

Outre les ouvertures constituées par les fentes vᵢ(i = 1, 2,...,n) régulièrement espacées le long de l'axe XX, le flan 1 présente également :
. une première série d'échancrures, 18, dirigées parallèlement aux ouvertures vᵢ, découpées de manière analogue aux "vides" vᵢ et qui débouchent sur un bord longitudinal 19 du flan ;
. une seconde série d'échancrures, 20, débouchant sur l'autre bord longitudinal 21 du flan et qui sont symétriques des échancrures 18 par rapport à l'axe XX.

Comme bien visible sur la figure 5, les échancrures 18,-et par là même les échancrures 19 aussi-, sont délimitées par deux bords parallèles 22, 23 réunis à leurs extrémités les plus proches de l'axe XX par une découpe en "doigt de gant", 24, identique à la découpe 4 précédemment décrite mais disposée tête-bêche par rapport à celle-ci pour définir entre elles les barrettes 16 et 17, d'une part et, d'autre part, des pattes 25 régnant entre les échancrures 18.

Dans la réalisation décrite et représentée, la largeur g des "pleins" ou barreaux pᵢ est légèrement supérieure à celle des "vides" vᵢ, tandis que la largeur h des pattes 25 régnant entre les échancrures 18 est elle aussi légèrement supérieures à la largeur j desdites échancrures.

Ainsi, et à titre d'exemple uniquement, de bons résultats ont-ils été obtenus avec une armature en feuillard d'acier dans laquelle la distance des bords 19 et 21 était de l'ordre de 35 mm, la largeur E de l'ordre de 1, 5 mm, les largeurs g et h de l'ordre de 2 mm, la largeur f de l'ordre de 0, 9 mm, la longueur totale des échancrures comme 18 et 20 de l'ordre de 7,5 mm et la longueur des découpes en "doigt de gant" comme 4 et 24 de l'ordre de 2, 5 mm.

Pour la réalisation d'un joint 11, figure 4, à partir du flan illustré sur les figures 1 et 5, ledit flan est d'abord plié suivant un profil en U maintenant les barreaux pleins pᵢ parallèles entre eux, mais amenant les pattes 25 dans des plans parallèles au plan de symétrie de l'armature 10, puis celle-ci est alors enrobée par du caoutchouc 12 ou un autre élastomère, ou un mélange de matériaux élastomères et/ou plastomères, généralement et le plus simplement par un procédé d'extrusion, de co-extrusion ou analogue en soi connu et qui n'est donc pas décrit ici. Au cours du processus on dispose, le cas échéant, des fils inextensibles 35 au voisinage de l'axe XX pour interdire l'allongement axial du profilé tout en autorisant sa compression.

Un profilé 11, comme illustré très schématiquement figure 4, et qui peut être une coulisse de guidage de glace ou vitre d'automobile, un lécheur de bas de glace, un joint de coffre, de porte, de custode, de capot moteur d'automobile ou encore un joint de capot de machine outil, de porte d'hélicoptère ou d'autre véhicule maritime, ferroviaire ou routier..., etc, peut alors être comprimé au montage, de sorte que ce dernier peut être réalisé en positionnant d'abord sur le pourtour d'une baie que le profilé est destiné à équiper les deux extrémités du profilé coupé à une longueur très légèrement supérieure à la longueur périphérique de la baie puis, en tirant partie de la compression autorisée par l'armature, en effectuant la mise en place définitive précédée ou suivie, le cas échéant, d'un collage, d'une soudure ou d'une vulcanisation après raboutage des extrémités.

La structure telle que définie ci-dessus autorise une compression de l'armature plus facile que son extension et permet ainsi d'obtenir un montage satisfaisant, quine nécessite pas d'opération de reprise et à la fin duquel le profilé, par exemple un joint, épouse de façon tout à fait satisfaisante la périphérie de la baie qu'il équipe, même si cette dernière présente une forme gauche relativement complexe avec de faibles rayons de courbure dans certains plans. En outre, la compression autorisée par l'armature permet également de s'affranchir des difficultés liées, lors de la mise en place, aux tolérances de cotes de fabrication qui peuvent être de l'ordre de 3 à 10 cm pour une longueur développée totale de 3 à 4 mètres.

On se réfère maintenant aux figures 3 et 6 à 8 relatives à des variantes de réalisation. Dans la réalisation selon la figure 3, le ou les fils inextensibles 35 incorporés dans le matériau du profilé ne sont pas disposés au voisinage du plan de symétrie XX de l'armature mais dans la zone des barrettes 16, 17 de liaison des "pleins" pᵢ aux pattes 25, la présence des fils 35 ne modifiant pas la position de la "fibre neutre" du profilé sous contrainte, comme d'ailleurs dans la réalisation des figures 1, 2 et 5.

Dans la réalisation selon la figure 6, les "vides" vᵢ règnent sur sensiblement toute la largeur de l'armature, à peu près du bord 19' jusqu'au bord 21', de sorte que les pattes d'extrémité 25' sont de très faible longueur et pratiquement limitées à un court tronçon reliant entre elles les barrettes 16' et 17' analogues aux barrettes 16 et 17 de la réalisation précédente.

Dans la réalisation selon la figure 7, les "vides " vᵢ règnent également sensiblement entre les bords 19'' et 21'' de l'armature, les pattes 25'' étant ici de plus courte longueur encore que les pattes 25' de la réalisation selon la figure 6, d'une part, et présentant en outre, d'autre part, un contour légèrement différent compte-tenu de ce que les échancrures comme 18'' et 20'' sont de simples fentes à bords parallèles et extrémités arrondies, démunies par conséquent de la forme en "doigt de gant" des réalisations précédentes.

Dans la réalisation selon la figure 8, le motif de découpe du flan 1''' est du type de celui montré sur la figure 1, sous la réserve toutefois que les pattes 25''' sont de longueur plus importante que dans la réalisation telle que montrée sur les figures 1, 2 et 5 puisqu'elles sont d'une longueur voisine de celles des barreaux pleins pᵢ, d'une part, et que l'armature est disymétrique, d'autre part, les pattes du bord opposé à celui présentant les pattes 25''' étant nettement plus courtes que ces dernières.

## Revendications

1. Armature (10) pour profilé comprenant une multiplicité d'éléments formant un dessin répétitif de "vides " et "pleins " suivant sa direction longitudinale (XX) et dans laquelle les "vides" sont ménagés par des fentes (vᵢ) à bords dirigés sensiblement perpendiculairement à la direction longitudinale de l'armature (1), caractérisée en ce que ces fentes (vᵢ) ont des extrémités (4) en "doigt de gant" de plus faible largeur (f) que le reste (E) des fentes.

2. Armature selon la Revendication 1, caractérisée en ce qu'elle présente sur chacun de ses bords longitudinaux (19, 21 ; 19', 21' ; 19'', 20''...) des échancrures (18, 20) alignées avec les "pleins" du reste de l'armature et qui limitent des pattes (25 ; 25' ; 25'',...) alignées avec les "vides" du reste de l'armature.

3. Armature selon la Revendication 2, caractérisée en ce que chaque échancrure (18, 20) est conformée à son extrémité la plus distante du bord (19, 21 ; 19', 21'... ) suivant un "doigt de gant " de plus faible largeur que celle (j) du reste de l'échancrure.

4. Armature selon l'une quelconque des Revendications précédentes, caractérisée en ce que la largeur (g) des "pleins" (pᵢ) du corps de l'armature est légèrement supérieure à la plus grande largeur (E) de celle des "vides" (vᵢ).

5. Armature selon l'une quelconque des Revendications précédentes, caractérisée en ce que la largeur (h) des pattes (25) ménagées sur les bords longitudinaux est sensiblement égale à celle des "pleins" (pᵢ) et en ce que celle des échancrures (18, 20) dans leur plus grande largeur est très sensiblement égale à celle (E) des "vides" (vᵢ) dans leur plus grande largeur également.

6. Armature selon la Revendication 1 ou 2, caractérisée en ce que les échancrures (18'', 20'') ménagées sur les bords longitudinaux de l'armature sont des fentes de largeur constante sur toute leur longueur et à extrémité simplement arrondie.

7. Armature selon l'une quelconque des Revendications précédentes, caractérisée en ce que les "pleins" (pᵢ) sont reliés aux pattes (25) des bords longitudinaux par des barrettes (16, 17), de plus faible largeur que celle desdits "pleins" et/ou "pattes" (25).

8. Flan (1) en métal ou autre matériau comme une matière plastique présentant des caractéristiques mécaniques analogues, notamment en traction/compression et flexion, façonné pour former, après pliage, une armature (10) de profilé utilisable, notamment, pour la fabrication de joints d'étanchéité et découpé suivant une succession régulière de "pleins" et "vides", ces derniers étant conformés suivant des fentes allongées (vᵢ) dirigées sensiblement perpendiculairement à sa direction longitudinale, caractérisé en ce que les fentes (vᵢ) sont terminées à leurs extrémités par des évidements en "doigt de gant" (4) de plus faible largeur que le reste desdites fentes.

9. Flan selon la Revendication 8, caractérisé en ce que ses bords longitudinaux présentent des échancrures (18) de formes semblables à celles desdites fentes (vᵢ).

10. Profilé, notamment bande ou joint d'étanchéité utilisable en particulier dans le domaine de l'industrie automobile, caractérisé en ce qu'il comporte une armature (10) selon l'une quelconque des Revendications 1 à 7 ci-dessus.

11. Profilé selon la Revendication 10, caractérisé en ce qu'il comprend, en outre, un ou/des fils inextensibles (35) au voisinage de l'armature (10).

## Patentansprüche

1. Armierung (10) für ein Profil, umfassend eine Vielzahl von Elementen, die ein sich wiederholendes Muster von "leeren Räumen" und "vollen Räumen" gemäß ihrer Längsrichtung (XX) bilden, und in welcher die "leeren Räume" durch Schlitze (vᵢ) mit Rändern, die im wesentlichen senkrecht zu der Längsrichtung der Armierung (1) ausgerichtet sind, ausgespart sind, dadurch **gekennzeichnet**, daß diese Schlitze (vᵢ) äußerste Enden (4) in der Form von einem "Fingerling" von geringerer Breite (f) als der Rest (E) der Schlitze haben.

2. Armierung nach Anspruch 1, dadurch **gekennzeichnet**, daß sie auf jedem ihrer Längsränder (19, 21; 19', 21'; 19'', 20'' ...) Ausschnitte (18, 20) aufweist, die mit den "vollen Räumen" des Rests der Armierung fluchten und die Laschen (25; 25'; 25'', ...) begrenzen, welche mit den "leeren Räumen" des Rests der Armierung fluchten.

3. Armierung nach Anspruch 2, dadurch **gekennzeichnet**, daß jeder Ausschnitt (18, 20) an seinem äußersten Ende, das von dem Rand (19, 21; 19', 21' ...) am meisten entfernt ist, gemäß einem "Fingerling" von geringerer Breite, als es diejenige (j) des Rests des Ausschnitts ist, geformt ist.

4. Armierung nach irgendeinem der vorhergehenden Ansprüche, dadurch **gekennzeichnet**, daß die Breite (g) der "vollen Räume" (pᵢ) des Körpers der Armierung leicht höher als die größte Breite (E) der "leeren Räume" (vᵢ) ist.

5. Armierung nach irgendeinem der vorhergehenden Ansprüche, dadurch **gekennzeichnet**, daß die Breite (h) der Laschen (25), die auf den Längsrändern ausgespart sind, im wesentlichen gleich derjenigen der "vollen Räume" (pᵢ) ist, und dadurch, daß diejenige der Ausschnitte (18, 20) in ihrer größeren Breite sehr erheblich gleich derjenigen (E) der "leeren Räume" (vᵢ) in ihrer größeren Breite ist.

6. Armierung nach Anspruch 1 oder 2, dadurch **gekennzeichnet,** daß die Ausschnitte (18'', 20''), die auf den Längsrändern der Armierung ausgespart sind, Schlitze von über ihre gesamte Länge konstanter Breite und mit einfach gerundetem äußerstem Ende sind.

7. Armierung nach irgendeinem der vorhergehenden Ansprüche, dadurch **gekennzeichnet**, daß die "vollen Räume" (pᵢ) mit den Laschen (25) der Längsränder durch Stege (16, 17) von geringerer Breite, als es diejenige der "vollen Räume" und/oder "Laschen" (25) ist, verbunden sind.

8. Zuschnitt (1) aus Metall oder einem anderen Material, wie einem Kunststoff, das ähnliche mechanische Eigenschaften, insbesondere im Zug/Druck und in der Biegung, aufweist, welches zum Formen, nach Biegen einer Armierung (10) von einem, insbesondere für die Herstellung von Dichtungen, brauchbaren Profil bearbeitet und gemäß einer regelmäßigen Aufeinanderfolge von "vollen Räumen" und "leeren Räumen" gestanzt ist, wobei diese letzteren gemäß langgestreckten Schlitzen (vᵢ) geformt sind, die im wesentlichen senkrecht zu ihrer Längsrichtung ausgerichtet sind, dadurch **gekennzeichnet**, daß die Schlitze (vᵢ) an ihren äußersten Enden durch Aussparungen in der Form eines "Fingerlings" (4) von geringerer Breite als der Rest dieser Schlitze begrenzt sind.

9. Zuschnitt nach Anspruch 8, dadurch **gekennzeichnet**, daß seine Längsränder Ausschnitte (18) von Formen aufweisen, die ähnlich denjenigen der Schlitze (vᵢ) sind.

10. Profil, insbesondere Streifen oder Dichtung, der bzw. die auf dem Gebiet der Automobilindustrie verwendbar ist, dadurch **gekennzeichnet**, daß es eine Armierung (10) gemäß irgendeinem der obigen Ansprüche 1 bis 7 hat.

11. Profil nach Anspruch 10, dadurch **gekennzeichnet**, daß es außerdem einen undehnbaren Faden (35) oder undehnbare Fäden (35) in der Nähe der Armierung (10) umfaßt.

## Claims

1. A reinforcing member (10) for a structural section and comprising a multiplicity of elements forming a repetitive design of empty spaces and solid areas in its longitudinal direction (XX) and in which the empty spaces are provided with slots (vᵢ) having edges directed substantially at right-angles to the longitudinal direction of the reinforcing member (1), characterised in that the slots (vᵢ) have ends (4) like the fingers of a glove and of which the width (f) is less than the rest (E) of the slots.

2. A reinforcing member according to claim 1, characterised in that it has on each of its longitudinal edges (19, 21 ; 19', 21' ; 19'', 20''...) cutouts (18, 20) which are aligned with the solid areas of the rest of the reinforcing member and which define tabs (25 ; 25' ; 25''...) aligned with the empty spaces in the rest of the reinforcing member.

3. A reinforcing member according to claim 2, characterised in that each cutout (18, 20) is, at its end which is most remote from the edge (19, 21 ; 19', 21'...) shaped like the finger of a glove, its width being less than that (j) of the rest of the cutout.

4. A reinforcing member according to any one of the preceding claims, characterised in that the width (g) of the solid areas (pᵢ) of the body of the reinforcing member is slightly greater than the greatest width (E) of that of the empty spaces (vᵢ).

5. A reinforcing member according to any one of the preceding claims, characterised in that the width (h) of the tabs (25) provided on the longitudinal edges is substantially equal to that of the solid areas (pᵢ) and in that the width of the cutouts (18, 20) at its greatest point is very substantially equal to that (E) of the empty spaces (vᵢ), also at their greatest width.

6. A reinforcing member according to claim 1 or 2, characterised in that the cutouts (18'', 20'') provided on the longitudinal edges of the reinforcing member are slots of a width which is constant over their entire length while their ends are simply rounded.

7. A reinforcing member according to any one of the preceding claims, characterised in that the solid areas (pᵢ) are connected to the tabs (25) on the longitudinal edges by strips (16, 17) the width of which is less than that of the aforesaid solid areas and/or "tabs" (25).

8. A blank (1) of metal or other material such as a plastics material having similar mechanical characteristics, particularly in terms of traction/compression and flexion, shaped so that after folding, it constitutes a reinforcing member (10) for a structural section which can be used in particular for the manufacture of sealing gaskets and cut out in a regular succession of solid areas and empty spaces, these latter being shaped in accordance with elongated slots (vᵢ) directed substantially at right-angles to its longitudinal direction, characterised in that the slots (vᵢ) are at their ends terminated by recesses (4) shaped like the fingers of a glove and the width of which is less than that of the rest of the said slots.

9. A blank according to Claim 8, characterised in that the longitudinal edges have cutouts (18) which are similar in shape to those of the said slots (vᵢ).

10. A structural member, particularly a sealing-tight strip or gasket which can be used particularly in the field of the motor vehicles industry, characterised in that it comprises a reinforcing member (10) in accordance with any one of claims 1 to 7 above.

11. A structural member according to claim 10, characterised in that it further comprises one or more inextensible threads (35) in the vicinity of the reinforcing member (10).
